# DEMANDE DE BREVET EUROPEEN

(11) **EP 0 600 809 A1**
(43) Date de publication de la demande: **08.06.1994**
(21) Numéro de dépôt: 93420473.6
(22) Date de dépôt: 29.11.1993
(51) Int. Cl.: H02J 3/01, H02J 3/18, H02M 1/12

(54) **Compensateur dynamique de courant électrique alternatif**

(30) Priorité: 30.11.1992 FR 9214596
(71) Demandeur: ALPES TECHNOLOGIES (société anonyme), F-74940 Annecy le Vieux (FR)
(72) Inventeur: Masset, Daniel, F-74290 Menthon Saint Bernard (FR); Mansey, Bernard, F-74000 Annecy (FR)
(74) Mandataire: Poncet, Jean-François

(57) **Abrégé**

Le compensateur selon l'invention est destiné à être connecté en parallèle sur une charge polluante (1), aux bornes d'un réseau (2) d'alimentation électrique. Il comprend un capteur de courant (5) pour produire un signal électrique image de l'intensité instantanée du courant débité par le réseau (2), et des moyens (16-21) pour produire un signal électrique image de l'intensité instantanée du courant alternatif total approprié sur le réseau. Des moyens de stockage d'énergie électrique (8) sont aptes à stocker et libérer la quantité d'énergie électrique nécessaire à la compensation permanente au cours d'une période. Des moyens électroniques de commutation statique (9) connectent les moyens de stockage d'énergie électrique (8) en parallèle sur la charge (1) en fonction de signaux de commande de commutation. Le circuit de commande (11) génère les signaux de commande de façon à réduire ou annuler la différence entre le courant réel dans le réseau et le courant alternatif total approprié. Le compensateur permet de compenser les perturbations d'amplitude et de phase du courant produites par la charge (1).

## Description

Les réseaux de distribution d'énergie électrique sont de plus en plus perturbés par la connexion de charges comportant des circuits électriques de puissance à semi-conducteurs. De telles charges absorbent en effet des courants non sinusoïdaux, éventuellement déphasés, dont la circulation dans l'impédance du réseau entraine la déformation de la tension d'alimentation. Outre les perturbations de tension qui en résultent, et qui peuvent dépasser les limites admissibles, les harmoniques de courant qui parcourent le réseau d'alimentation perturbent fortement l'électronique et l'informatique alimentées par le réseau perturbé.

La présente invention concerne les dispositifs permettant d'atténuer ou de compenser les perturbations ainsi générées par les charges polluantes.

Une solution existante consiste à utiliser des filtres passifs, associant des inductances et des condensateurs. Cette solution conduit toutefois à des volumes importants, à un coût non négligeable, à un filtrage imparfait car toujours partiel, et les filtres passifs sont difficilement modifiables pour suivre les évolutions de la charge ou du réseau.

On connaît également un compensateur dynamique de courant électrique alternatif, décrit dans le document DE-A-3 708 468, destiné à être connecté en parallèle sur une charge en vue de l'absorption d'un courant alternatif total approprié sur un réseau extérieur de distribution. Le dispositif décrit comprend des moyens de mesure du courant débité dans le réseau, des moyens pour générer un signal électrique image de l'intensité instantanée du courant alternatif total approprié, des moyens de stockage d'énergie électrique aptes à stocker et libérer la quantité d'énergie électrique nécessaire à la compensation permanente, au cours d'une période, entre le courant dans la charge et le courant total approprié, des moyens électroniques de commutation pour connecter les moyens de stockage d'énergie électrique en parallèles sur la charge à des instants déterminés et selon une proportion déterminée par des signaux de commande de commutation, et un circuit de commande pour générer les signaux de commande de commutation de façon à réduire ou annuler en permanence la différence entre le signal de mesure du courant dans le réseau et le signal image du courant alternatif total approprié.

Toutefois, les circuits décrits dans ce document supposent que les moyens de stockage d'énergie électrique sont pourvus d'une énergie électrique suffisante dès le début de fonctionnement du circuit. En l'absence d'une charge initiale, le circuit ne peut pas fonctionner correctement, et ne peut en tout cas pas être connecté directement au réseau. En particulier, si l'on considère le mode de réalisation dans lequel les moyens de stockage d'énergie électrique sont des condensateurs, on constate que ces condensateurs réalisent un court-circuit entre deux ou plusieurs phases du réseau lorsqu'ils ne sont pas chargés, le courant de court-circuit passant notamment à travers les diodes de roue libre.

Un premier problème proposé par la présente invention est de concevoir un perfectionnement à un tel compensateur dynamique, permettant d'éviter tout risque de mise en court-circuit lors de la mise sous tension du compensateur.

Un second problème proposé par la présente invention est de réduire les pertes de commutation résultant du fonctionnement en commutation d'un tel compensateur. En effet, dans les compensateurs connus, on provoque la commutation des transistors de puissance selon une fréquence déterminée très supérieure à la fréquence fondamentale du réseau, et cette fréquence de commutation ne peut pas être réduite sans nuire à la suppression des harmoniques de courant. L'invention vise ainsi à concevoir une nouvelle structure de compensateur dans laquelle la fréquence de commutation peut être nettement réduite.

Un troisième problème proposé par la présente invention est de concevoir un compensateur dynamique susceptible de réagir en temps réel à toute perturbation, permettant ainsi la compensation de tous les types de perturbations, qu'elles soient périodiques ou même apériodiques.

L'invention vise également à réaliser un compensateur dans lequel on puisse aisément modifier le type de compensation recherchée, c'est-à-dire compenser soit les harmoniques seuls, soit à la fois les harmoniques et le déphasage.

Pour cela, le circuit compensateur de courant électrique alternatif selon l'invention, destiné à être connecté en parallèle sur une charge en vue de l'absorption d'un courant alternatif total approprié sur un réseau extérieur de distribution d'énergie électrique, comprend :
- des moyens pour produire un signal électrique image de l'intensité instantanée du courant débité dans le réseau,
- des moyens pour produire un signal électrique image de l'intensité instantanée du courant alternatif total approprié, par exemple le courant que débiterait le réseau s'il était connecté à une résistance pure absorbant la même puissance active efficace que la charge polluante,
- des moyens de stockage d'énergie électrique, aptes à stocker et libérer la quantité d'énergie électrique nécessaire à la compensation permanente, au cours d'une période, entre le courant dans la charge et le courant total approprié,
- des moyens électroniques de commutation statique pour connecter lesdits moyens de stockage d'énergie électrique en parallèle sur la charge à des instants déterminés et selon une proportion déterminée par des signaux de commande de commutation,
- un circuit de commande pour générer en régime permanent lesdits signaux de commande de commutation en fonction de la différence entre ledit signal électrique image du courant instantané dans le réseau et ledit signal électrique image du courant alternatif total approprié, de façon à réduire ou annuler en permanence ladite différence des signaux,
- des moyens pour, au cours d'une étape préalable de démarrage, emmagasiner dans les moyens de stockage d'énergie une énergie électrique potentielle suffisante adaptée au fonctionnement ultérieur de régime permanent,
- et des moyens pour inhiber la compensation de courant électrique alternatif lorsque ladite énergie électrique potentielle suffisante n'est pas présente dans les moyens de stockage d'énergie.

Selon un premier mode de réalisation, les moyens pour produire le signal électrique image de l'intensité instantanée du courant alternatif total approprié comprennent :
- des moyens de capteur de courant connectés en série avec la charge, produisant un signal électrique image du courant dans la charge,
- des moyens de filtrage passe-bande calés sur la fréquence fondamentale du courant dans la charge, recevant ledit signal électrique image du courant dans la charge et assurant l'extraction de sa composante fondamentale.

Le signal ainsi produit constitue ledit signal électrique image de l'intensité instantanée du courant alternatif total approprié. Ce signal est sinusoïdal. Le circuit compense ainsi les harmoniques de courant générés par la charge, et se comporte comme un filtre actif.

Selon un autre mode de réalisation, les moyens pour produire le signal électrique image de l'intensité instantanée du courant alternatif total approprié comprennent en outre :
- des moyens de capteur de tension connectés aux bornes du réseau, produisant un signal électrique de synchronisation avec la tension du réseau,
- un circuit pour produire un signal proportionnel à la valeur efficace de ladite composante fondamentale de courant dans la charge,
- un circuit pour produire un signal fonction du déphasage entre le courant dans la charge et la tension du réseau,
- un circuit pour générer un signal sinusoïdal à fréquence fondamentale, en phase avec la tension réseau, et dont l'amplitude est d'une part proportionnelle à la valeur efficace de la composante fondamentale de courant dans la charge et d'autre part décroissante en fonction du déphasage entre le courant dans la charge et la tension réseau. Ce signal constitue alors le signal image de la composante à fréquence fondamentale du courant actif efficace dans la charge.

Le signal ainsi produit constitue ledit signal électrique image de l'intensité instantanée de courant alternatif total approprié. Ce signal est sinusoïdal et en phase avec la tension.

Un tel circuit compense simultanément les perturbations d'amplitude et les perturbations de phase du courant générées par la charge.

Dans l'un et l'autre des modes de réalisation, un tel circuit réagit en temps réel aux perturbations, qu'elles soient périodiques ou apériodiques.

Les moyens électroniques de commutation statique comprennent des commutateurs statiques, fonctionnant en commutation, et formant un convertisseur continu-alternatif réversible dont l'entrée alternative est connectée aux bornes du réseau par l'intermédiaire d'une ou plusieurs inductances série de filtrage des harmoniques de courant de découpage, et dont l'entrée continue est connectée à des condensateurs formant les moyens de stockage d'énergie électrique. Chaque commutateur statique est associé à un thyristor de roue libre connecté en anti-parallèle sur le commutateur. Chaque thyristor est commandé par le circuit de commande de façon à inhiber sa conduction pendant l'étape préalable de démarrage et/ou lorsque l'énergie électrique potentielle suffisante n'est pas présente dans les condensateurs de stockage d'énergie, et de façon à provoquer sa conduction unidirectionnelle de type diode pendant le régime permanent du compensateur.

D'autres objets, caractéristiques et avantages de la présente invention ressortiront de la description suivante de modes de réalisation particuliers, faite en relation avec les figures jointes, parmi lesquelles :
- la figure 1 illustre le principe général d'un compensateur dynamique connecté en parallèle sur une charge polluante
- la figure 2 illustre les formes d'ondes de courant, dans le réseau, dans la charge et dans le compensateur, dans un cas idéal d'une compensation parfaite ;
- la figure 3 est un schéma de principe montrant les principaux organes d'un dispositif compensateur dynamique selon la présente invention ;
- la figure 4 illustre une variante du schéma général de la figure 3, dans une application à la réalisation d'un filtre actif
- la figure 5 est un schéma plus détaillé des circuits de commande d'un compensateur dynamique selon la présente invention, pour la compensation simultanée des perturbations harmoniques et des perturbations de phase ;
- la figure 6 illustre les formes d'onde des signaux et des courants à différents points du circuit de la figure 5 ;
- les figures 7 et 8 illustrent deux schémas de puissance constituant des moyens électroniques de commutation statique pouvant être utilisés selon la présente invention ;
- la figure 9 illustre un schéma monophasé pouvant avantageusement être utilisé selon l'invention comme moyen électronique de commutation statique ;
- la figure 10 illustre les formes d'onde de courant en différents points du schéma de la figure 9, dans le cas d'une modulation de largeur d'impulsion ;
- la figure 11 représente les principaux éléments d'un circuit électronique de commutation triphasé selon un mode de réalisation de la présente invention ;
- la figure 12 illustre en vue partielle une variante de réalisation des circuits de commande de la figure 5, pour une commande de commutation à hystérésis ; et
- la figure 13 illustre les formes d'onde de courant en différents points du schéma de la figure 9, dans le cas d'une commande de commutation à hystérésis.

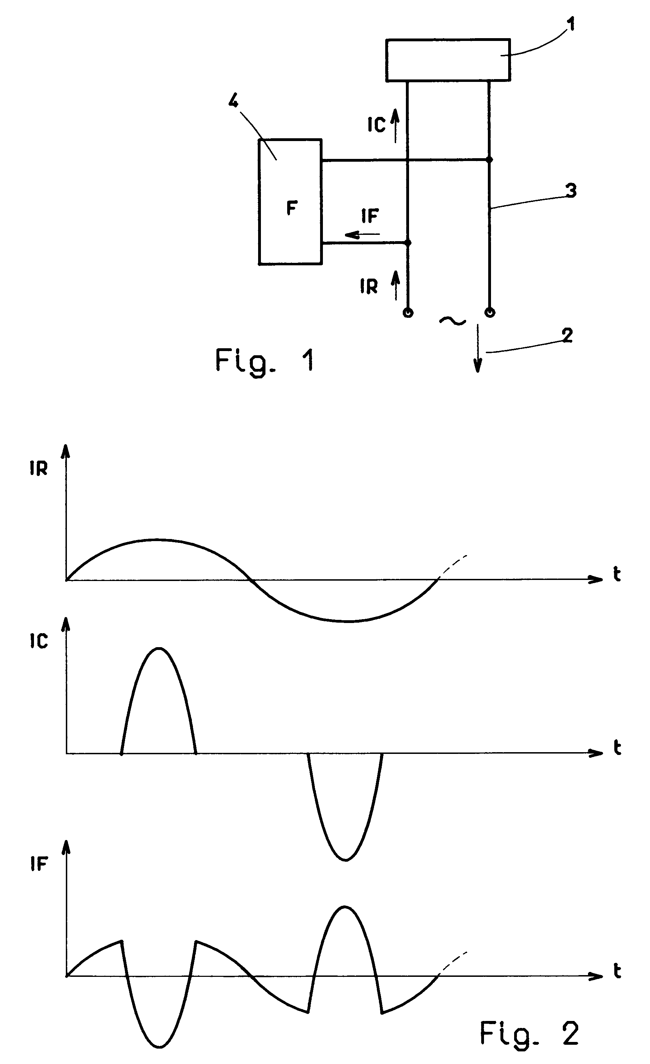

Le circuit représenté sur la figure 1 illustre la connexion d'une charge polluante 1 sur un réseau extérieur de distribution d'énergie électrique illustré par la direction de la flèche 2, par l'intermédiaire d'une ligne d'alimentation 3. Naturellement, la ligne d'alimentation 3 peut être monophasée, biphasée ou triphasée, en fonction du type de charge et de réseau. Le réseau 2 fournit habituellement une tension généralement sinusoïdale, assez peu perturbée par la charge polluante 1. Par contre, la charge polluante 1 consomme un courant IC qui, par rapport à la tension du réseau 2, peut présenter une forme non sinusoïdale comportant des harmoniques et/ou un déphasage. Le réseau 2 fournit un courant IR qui est la somme du courant IC dans la charge et du courant IF dans un compensateur 4 connecté en parallèle sur la charge polluante 1. En choisissant le courant IF de façon appropriée, on cherche à compenser les perturbations introduites par la charge polluante 1, de façon que le courant IR débité par le réseau 2 soit dépourvu d'harmoniques et/ou de déphasage.

Une telle situation de compensation est représentée sur la figure 2 : le courant IR débité par le réseau 2 est sensiblement sinusoïdal, alors que le courant dans la charge IC est fortement déformé. On a représenté un courant de charge similaire à celui absorbé par un pont monophasé de redresseurs alimentant un circuit capacitif de filtrage. Pour obtenir le courant IR sensiblement sinusoïdal, le courant IF absorbé par le compensateur 4 doit avoir la forme représentée sur le dessin.

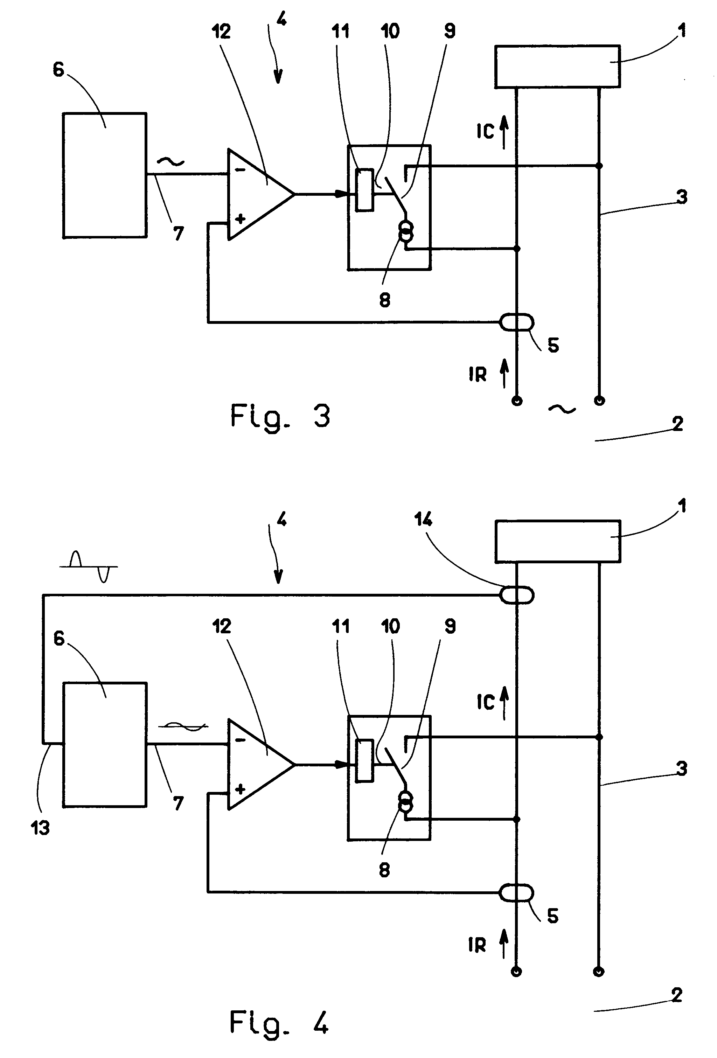

Pour obtenir une telle compensation, le circuit compensateur selon la présente invention peut comprendre les principaux organes fonctionnels du mode de réalisation représenté sur la figure 3. Le compensateur 4 de courant électrique alternatif comprend un capteur de courant réseau 5, tel qu'un transformateur de courant, pour produire un signal électrique image de l'intensité instantanée du courant IR débité par le réseau 2. Le compensateur 4 comprend en outre un circuit 6 pour produire sur sa sortie 7 un signal électrique image de l'intensité instantanée du courant alternatif total approprié que l'on veut faire débiter par le réseau 2. Par exemple, comme représenté schématiquement sur la figure, ce courant alternatif total approprié est sensiblement sinusoïdal.

Le compensateur comprend en outre des moyens de stockage d'énergie électrique 8, aptes à stocker et libérer la quantité d'énergie électrique nécessaire à la compensation permanente au cours d'une période entre le courant dans la charge IC et le courant alternatif total approprié que l'on veut faire débiter au réseau 2. Les moyens de stockage 8, schématiquement représentés par une source de courant, peuvent être un élément condensateur ou un élément inductif, puisque ces éléments ne sont pas destinés à fournir une puissance active efficace.

Le circuit comprend également des moyens électroniques de commutation statique 9, schématiquement représentés par un commutateur, permettant de connecter les moyens de stockage d'énergie électrique 8 en parallèle sur la charge 1 à des instants déterminés et selon une proportion déterminée par des signaux de commande de commutation présents sur une entrée de commande 10.

Un circuit de commande 11 génère en régime permanent les signaux de commande de commutation appropriés pour le pilotage des moyens électroniques de commutation statique 9, en fonction d'un signal d'entrée présent à la sortie d'un comparateur 12 faisant la différence entre ledit signal électrique image du courant instantané dans le réseau fourni par le capteur de courant réseau 5 et ledit signal électrique image du courant alternatif total approprié fourni par le circuit 6.

Le signe de la différence des signaux est choisi de façon à produire une contre-réaction, tendant à réduire ou annuler en permanence la différence des signaux.

Dans le cas d'une charge 1 constante, la compensation assurée par le compensateur 4 peut elle-même être constante. Le circuit 6 peut alors être un simple générateur de signal, générant le signal électrique image de l'intensité instantanée du courant alternatif total approprié que l'on veut faire débiter par le réseau 2.

Par contre, dans les cas où la charge varie en amplitude et/ou en phase, il est préférable d'adopter le schéma tel que représenté sur la figure 4. On retrouve les mêmes éléments que dans le mode de réalisation de la figure 3, avec une charge 1, une ligne 3, un réseau d'alimentation 2, un capteur de courant réseau 5, des moyens de stockage d'énergie électrique 8, des moyens de commutation 9, l'entrée de commande 10 et son circuit de commande 11, le comparateur 12.

La différence est que, sur la figure 4, le circuit 6 est un filtre passe-bande accordé sur la fréquence fondamentale de tension du réseau 2, et recevant sur son entrée 13 un signal électrique image du courant IC dans la charge produit par des moyens de capteur de courant de charge 14 connectés en série avec la charge 1. Le signal ainsi présent sur la sortie 7 du circuit de filtrage 6 est sinusoïdal, d'amplitude proportionnelle à la valeur efficace du courant IC dans la charge 1, et en phase avec ce courant IC dans la charge 1. Ce signal constitue le signal électrique image de l'intensité instantanée de courant alternatif total approprié, et le circuit ainsi constitué compense les harmoniques de courant générés par la charge 1.

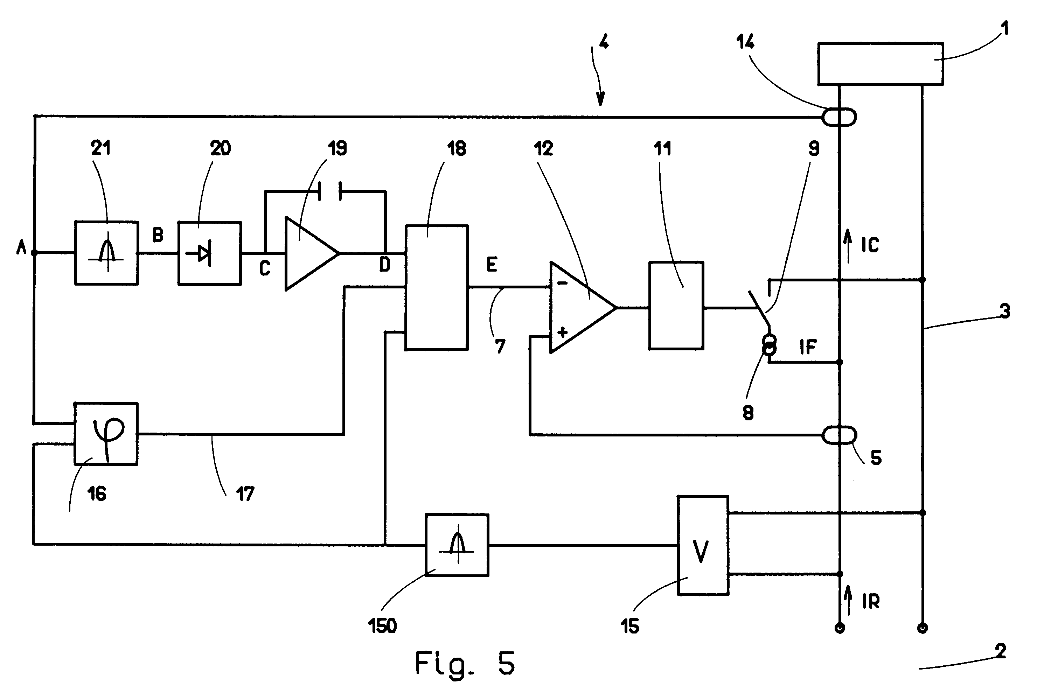

Le mode de réalisation plus complet représenté sur la figure 5 comprend les mêmes éléments principaux, à savoir la charge polluante 1, la ligne 3, le réseau d'alimentation extérieure 2, le capteur de courant réseau 5, les moyens de stockage 8 d'énergie électrique, les moyens de commutation 9, le circuit de commande 11, le comparateur 12.

Toutefois, ce mode de réalisation utilise un traitement de signal plus complexe pour produire sur la ligne 7 le signal électrique image de l'intensité instantanée du courant alternatif total approprié. Le capteur de courant de charge 14 connecté en série avec la charge 1 produit un signal image du courant IC dans la charge. Un capteur de tension 15, connecté aux bornes du réseau 2, produit un signal électrique de synchronisation avec la tension du réseau, signal qui est avantageusement filtré par un filtre passe-bas ou passe-bande 150 qui élimine les harmoniques de rangs supérieurs au fondamental. Un circuit 16 de mesure de déphasage reçoit le signal de tension du capteur de tension 15 et le signal de courant du capteur de courant de charge 14, et en déduit le déphasage entre le courant IC dans la charge 1 et la tension du réseau 2. Le signal présent sur la sortie 17 de ce circuit 16 peut être proportionnel au cosinus du déphasage entre le courant et la tension sur la charge 1.

Selon un mode de réalisation simplifié, le signal présent sur la ligne 17 peut être une approximation du cosinus du déphasage, par exemple une fonction linéaire de type 1 - X. Les circuits représentés sous les références 18, 19, 20 et 21 permettent, en fonction du signal de courant produit par le capteur de courant de charge 14, du signal de tension produit par le capteur de tension 15, du signal de déphasage présent sur la ligne 17, de générer un signal image de la composante à fréquence fondamentale du courant actif dans la charge 1. En sortie du circuit 18, sur la ligne 7, on trouve le signal électrique image de l'intensité instantanée du courant alternatif total approprié. Ce signal est sinusoïdal et en phase avec la tension du réseau 2.

Un tel circuit compense simultanément les perturbations d'amplitude et de phase de courant générées par la charge polluante 1.

Dans ce mode de réalisation, le circuit 21 est un filtre passe-bande calé sur la fréquence fondamentale de tension réseau, recevant sur son entrée A le signal électrique image du courant dans la charge produit par le capteur de courant de charge 14. Le circuit 21 assure l'extraction de la composante fondamentale de courant, que l'on retrouve sur sa sortie B. Ce signal est entré dans le circuit 20 qui est un redresseur double alternance, suivi du circuit 19 qui est un intégrateur, les circuits 19 et 20 permettant d'obtenir un signal proportionnel à la valeur efficace de la composante fondamentale de courant dans la charge 1.

Le circuit 18 doit être capable de générer sur sa sortie E un signal sensiblement sinusoïdal à fréquence fondamentale, en phase avec la tension du réseau 2, et dont l'amplitude est d'une part proportionnelle à la valeur efficace de la composante fondamentale de courant dans la charge, et d'autre part décroissante en fonction du déphasage entre le courant dans la charge et la tension réseau.

De façon idéale, l'amplitude du signal sur la sortie E peut être proportionnelle au produit de la valeur efficace de composante fondamentale de courant dans la charge et de la valeur absolue du cosinus du déphasage entre le courant et la tension dans la charge.

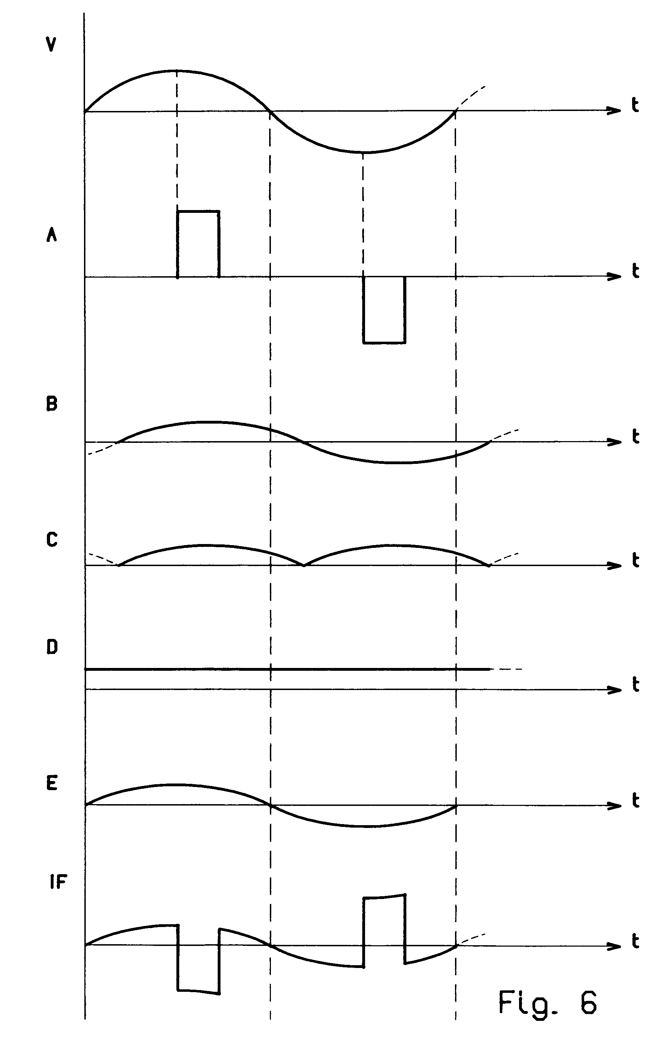

Le fonctionnement d'un tel circuit est illustré sur la figure 6, montrant les formes d'onde dans un mode particulier d'exploitation donné à titre d'exemple.

Dans ce mode d'exploitation, la tension V du réseau 2 est sinusoïdale. Le courant dans la charge polluante 1, à titre d'exemple, est un courant alternatif en escalier, comme représenté sur la figure par la courbe A. Cette courbe représente l'image du courant prise au point A du schéma de la figure 5, c'est-à-dire à l'entrée du filtre 21.

La courbe B représente la forme d'onde en sortie du filtre 21, ce signal étant sinusoïdal à fréquence fondamentale après filtrage de la courbe A.

La courbe C est le signal de la courbe B redressé en double alternance.

La courbe D est un signal continu égal à la valeur efficace du signal de la courbe B. Il est donc proportionnel à la valeur efficace de la composante fondamentale du courant dans la charge.

Après traitement dans le circuit 18, on obtient un signal tel que représenté sur la courbe E, qui est une sinusoïde en phase avec la tension V, et d'amplitude proportionnelle au cosinus du déphasage et à la valeur efficace du courant actif dans la charge.

En utilisant ce signal, on génère dans le compensateur un courant IF tel que représenté sur la figure, et il en résulte que le courant débité sur le réseau 2 a une forme sinusoïdale en phase avec la tension V.

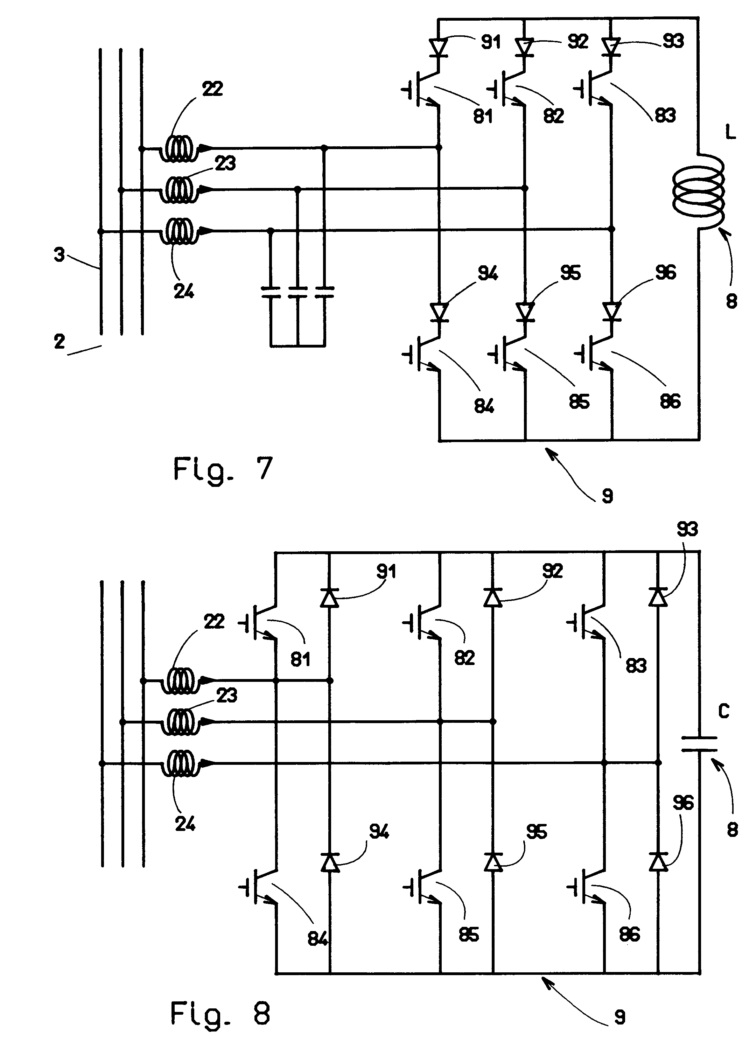

La figure 7 illustre schématiquement une structure de moyens électroniques de commutation statique 9, adaptés à un réseau triphasé. Dans le mode de réalisation représenté, les moyens électroniques de commutation statique comprennent des commutateurs statiques 81, 82, 83, 84, 85 et 86 tels que des transistors de commutation, fonctionnant en commutation selon les signaux de commande produits par un circuit de commande non représenté, associés à des diodes en série 91, 92, 93, 94, 95 et 96, et connectés en pont triphasé pour former un convertisseur continu-alternatif réversible dont les trois bornes d'entrée alternative sont connectées chacune à l'une des phases respectives du réseau 2 par l'intermédiaire d'inductances en série 22, 23 et 24. Les inductances 22, 23 et 24 assurent le filtrage des harmoniques de courant de découpage. L'entrée continue du convertisseur continu-alternatif réversible est connectée aux moyens de stockage d'énergie électrique 8 qui, dans ce mode de réalisation, sont une inductance L.

Le mode de réalisation de la figure 8 est dual de celui de la figure 7. Les commutateurs statiques 81 à 86 sont également connectés en pont triphasé, mais les diodes 91 à 96 sont connectées en roue libre en parallèle et en opposition avec les commutateurs respectifs. Les moyens de stockage d'énergie électrique 8 sont un condensateur C. Selon un mode de réalisation préféré de l'invention, les diodes 91 à 96 sont remplacées par des thyristors, comme cela sera expliqué ultérieurement.

Le circuit de commande 11 tel que représenté sur les figures 3 à 5 est adapté pour piloter en commutation le convertisseur continu-alternatif réversible de la figure 7 ou de la figure 8. Selon un premier mode de réalisation, le circuit de commande 11 effectue un découpage à modulation de largeur. Un tel circuit de commande peut être de tout type bien connu pour une telle commande en commutation, de sorte qu'il n'est pas nécessaire de le décrire plus en détail. La fréquence de découpage doit être nettement supérieure à la fréquence fondamentale de tension du réseau 2.

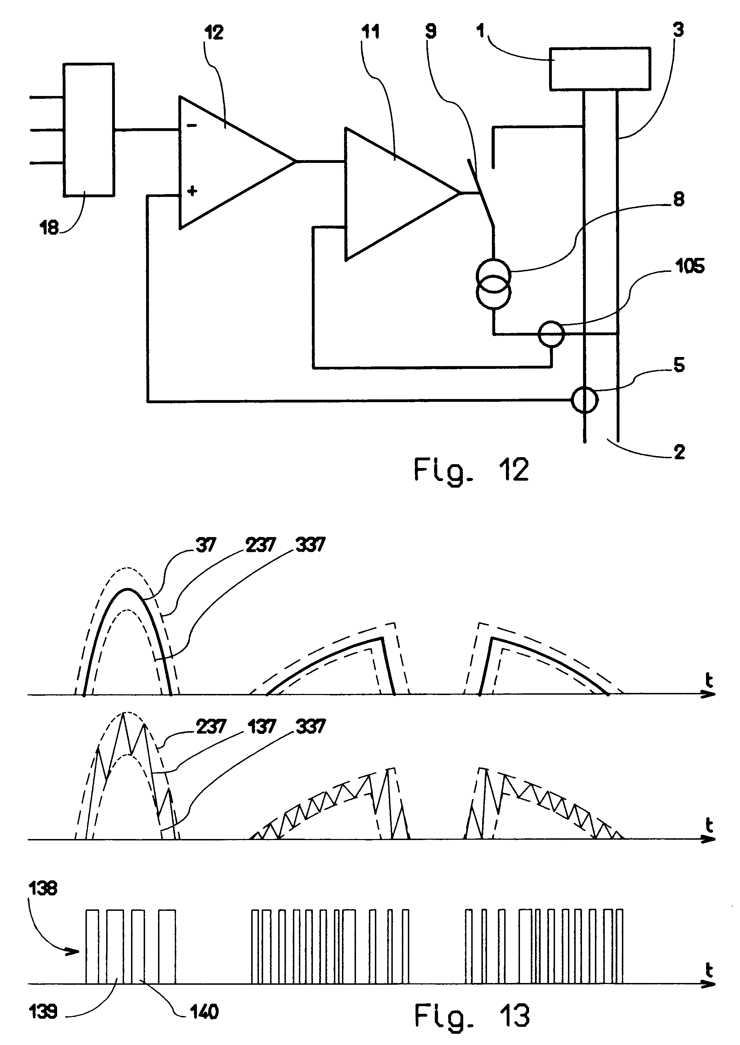

Toutefois, selon un mode de réalisation préféré de l'invention, on peut utiliser un circuit de commande 11 à hystérésis tel qu'illustré sur la figure 12. Cette figure 12 est une vue partielle du circuit de commande plus général de la figure 5. Dans ce cas, en aval du circuit 18, on retrouve le premier moyen comparateur 12 qui reçoit et compare le signal électrique image de l'intensité instantanée du courant débité dans le réseau 2 et provenant du capteur 5 et le signal image de l'intensité instantanée du courant alternatif total approprié présent sur la sortie du circuit 18. Le premier moyen comparateur 12 produit un signal électrique image du courant de compensation idéal que doit produire le compensateur. Un capteur 105 produit un signal électrique image de l'intensité instantanée du courant réel débité par le circuit compensateur. Un circuit 11 comprend un second moyen comparateur à hystérésis, qui reçoit ledit signal électrique image du courant de compensation idéal en sortie du comparateur 12 et ledit signal électrique image du courant réel débité par le circuit compensateur et provenant du capteur 105. Comme illustré sur la figure 13, ce second moyen comparateur du circuit 11 produit la commutation des moyens commutateurs statiques 9 correspondants dès que le courant réel 137 du compensateur atteint l'un des deux seuils d'hystérésis définissant les limites d'une plage de variation prédéterminée autour du courant de compensation idéal. La plage de variation prédéterminée, représentée par les enveloppes 237 et 337, peut elle-même être variable, symétrique ou dissymétrique autour du courant de compensation idéal 37.

Une telle disposition adapte automatiquement la fréquence de commutation à la vitesse de variation du courant dans le compensateur, de sorte que la fréquence moyenne de commutation peut être nettement réduite par rapport à une technique traditionnelle de modulation en largeur d'impulsion. Il en résulte que les pertes de commutation peuvent également être sensiblement réduites.

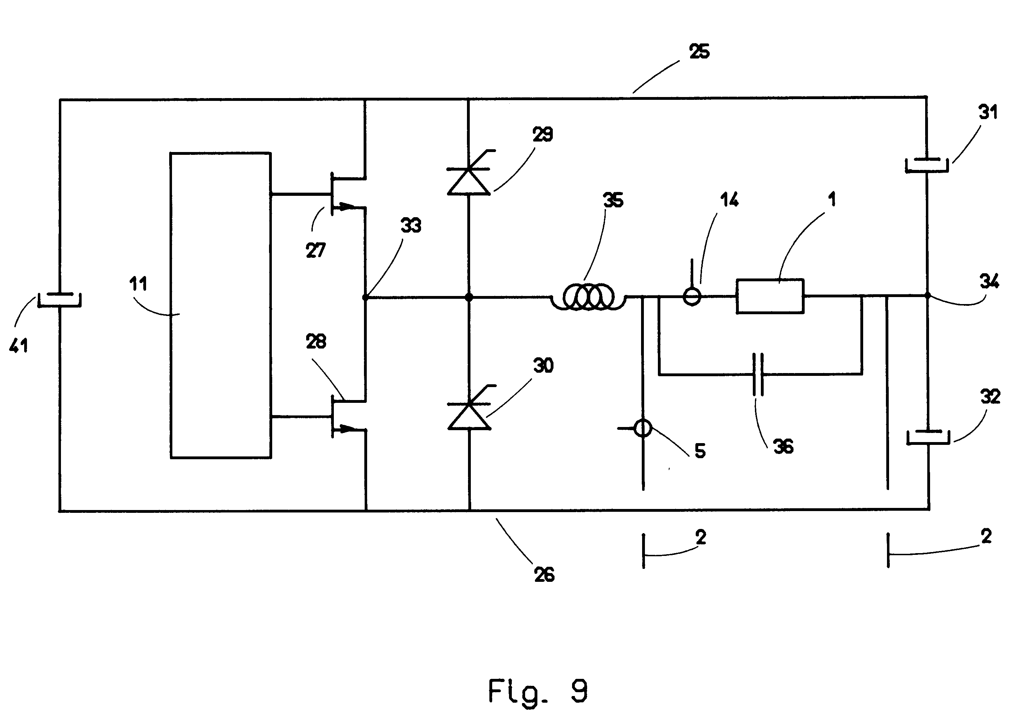

La figure 9 illustre un circuit de commutation monophasé pouvant constituer le circuit de puissance d'un compensateur selon la présente invention. Les lignes 25 et 26 constituent respectivement l'entrée continue positive et l'entrée continue négative du convertisseur continu-alternatif réversible.

Les moyens de commutation statique comprennent deux commutateurs statiques 27 et 28, associés à des diodes ou des thyristors de roue libre respectifs 29 et 30, et connectés en série entre l'entrée continue positive 25 et l'entrée continue négative 26 du convertisseur continu-alternatif réversible. En fonctionnement normal, les thyristors sont commandés par le circuit de commande pour fonctionner en diode, c'est-à-dire pour conduire librement dans le sens direct.

Les moyens de stockage d'énergie comprennent deux éléments condensateurs 31 et 32 connectés en série entre l'entrée continue positive 25 et l'entrée continue négative 26 du convertisseur continu-alternatif réversible.

L'entrée alternative du convertisseur continu-alternatif est formée par les points de connexion respectifs 33 des deux commutateurs statiques 27 et 28, et 34 des deux condensateurs de stockage d'énergie 31 et 32. Cette entrée alternative est connectée aux bornes du réseau 2 en série avec une inductance 35 de filtrage des harmoniques de courant de découpage. Un condensateur 36 est connecté en parallèle aux bornes de la charge 1, pour compléter le filtrage à réaliser par l'inductance 35.

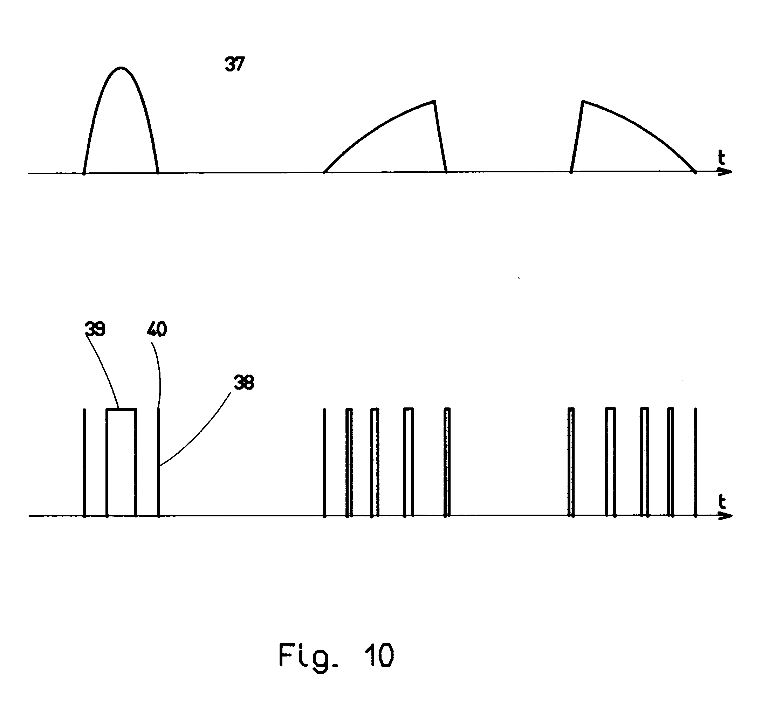

Le fonctionnement de ce circuit monophasé est tel qu'illustré sur la figure 2. Toutefois, les formes d'onde représentées sur la figure 2 sont les formes du courant après lissage par l'inductance 35 et le condensateur 36, et par les diodes ou thyristors de roue libre. En réalité, les courants qui traversent les transistors de commutation 27 et 28 sont des courants commutés, tels que représentés sur la figure 10 ou sur la figure 13. En prenant par exemple la forme de courbe de courant lissé 37, cette forme est obtenue par lissage du courant commuté 38 ou 138 dans le transistor 28. Entre deux étapes de conduction du transistor 28 telles que les étapes 39 et 40, ou les étapes 139 et 140, la conduction du courant parcourant l'inductance 35 est assurée par la diode ou le thyristor 29. Ainsi, on constate que pendant les étapes de conduction du transistor 28, l'énergie développée par le circuit compensateur est puisée dans le condensateur 32 qui se décharge. Entre deux étapes de conduction 39 et 40, ou 139 et 140, le transistor 28 est bloqué, et la conduction est assurée par la diode ou le thyristor 29 et le condensateur 31 qui se charge. Au cours des alternances négatives, la commande est assurée par le transistor 27, tandis que le condensateur 31 tend à se décharger et le condensateur 32 tend à se charger. Au bout d'une période, la charge des condensateurs 31 et 32 n'a pas sensiblement varié, aux pertes près.

Le condensateur 41 a pour fonction d'équilibrer la charge des condensateurs 31 et 32.

On retrouve, dans le circuit de la figure 9, la position du capteur de courant de charge 14, et la position du capteur de courant réseau 5, dont les signaux servent à la génération des signaux de commande envoyés sur les bases des transistors 27 et 28 par le circuit de commande 11.

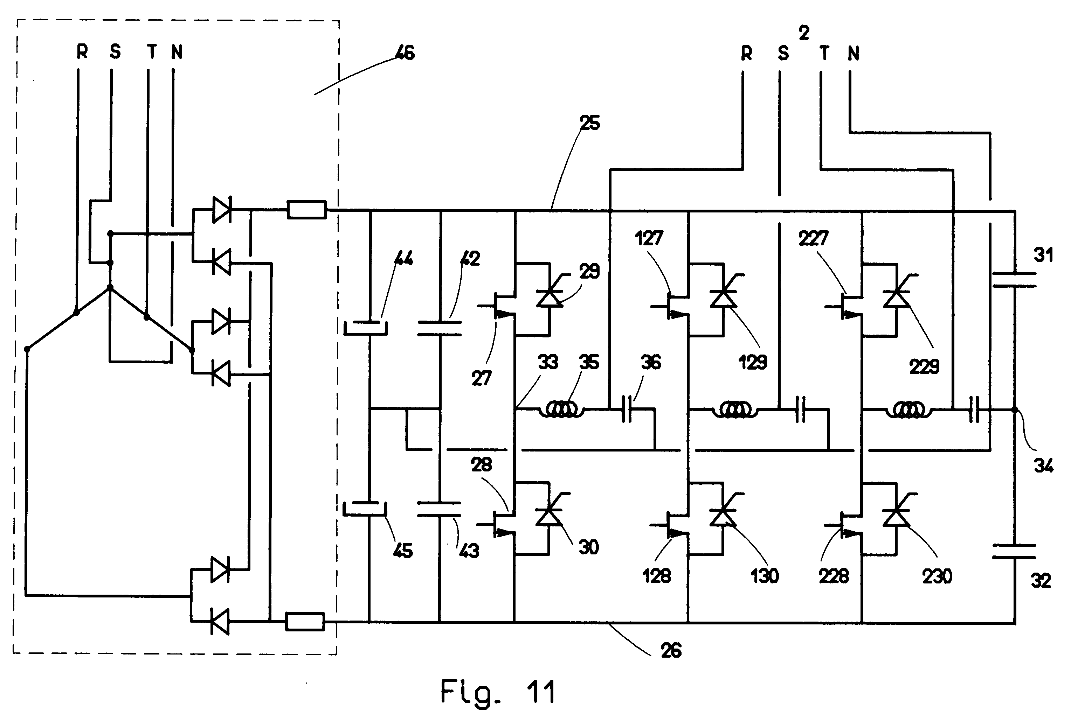

La figure 11 illustre une structure similaire à celle de la figure 9, mais pour une alimentation en triphasé. On retrouve les deux mêmes moyens de stockage d'énergie comprenant deux éléments condensateurs 31 et 32 connectés en série entre l'entrée continue positive 25 et l'entrée continue négative 26 du convertisseur continu-alternatif réversible. Les commutateurs électroniques statiques comprennent les groupes de commutateurs statiques 27 et 28, 127 et 128, 227 et 228, associés à leurs diodes ou thyristors respectifs 29 et 30, 129 et 130, 229 et 230. Le point milieu 34 des condensateurs 31 et 32 est connecté au neutre N du réseau 2.

Les commutateurs statiques d'un même groupe tels que les commutateurs 27 et 28 sont connectés en série entre l'entrée continue positive 25 et l'entrée continue négative 26 du convertisseur continu-alternatif. Les groupes se retrouvent en parallèle. Les points milieux respectifs des groupes de commutateurs statiques, tels que le point milieu 33, sont connectés à l'une des phases respectives R, S ou T du réseau 2, par l'intermédiaire d'une inductance, telle que l'inductance 35, en série, pour le filtrage des harmoniques de courant de découpage. Les condensateurs de filtrage tels que le condensateur 36 sont connectés entre phases et neutre du réseau.

Deux autres condensateurs 42 et 43 de stockage d'énergie sont connectés de manière similaire aux condensateurs 31 et 32, à l'autre bout des lignes 25 et 26, pour réduire les effets inductifs du circuit. Des condensateurs chimiques 44 et 45 peuvent également être utilisés pour compléter l'effet capacitif des condensateurs 31, 32, 42 et 43 qui sont des condensateurs simples.

Le circuit 46 est un générateur auxiliaire connecté à l'entrée continue du convertisseur continu-alternatif, pour assurer la charge initiale des condensateurs de stockage d'énergie 31, 32, 42, 43, 44 et 45. Ce circuit peut également compenser les pertes apparaissant dans le circuit de puissance.

Lorsque le compensateur est au repos, déconnecté, les condensateurs de stockage d'énergie sont déchargés. Il est indispensable de charger les condensateurs préalablement à toute connexion du compensateur sur le réseau, à défaut de quoi les condensateurs constituent un court-circuit. Pour cela, on réalise une étape préalable de démarrage, au cours de laquelle le circuit générateur auxiliaire 46 assure la charge initiale des condensateurs de stockage d'énergie 31, 32, 42, 43, 44 et 45. Pendant cette étape préalable de démarrage, on inhibe la compensation de courant électrique alternatif réalisée par le compensateur tant que l'énergie électrique potentielle emmagasinée dans les condensateurs n'a pas atteint un niveau suffisant, c'est-à-dire tant que la tension aux bornes des condensateurs n'est pas supérieure ou égale à la tension de crête du réseau.

Selon un premier mode de réalisation, le circuit de commande, par exemple le circuit 11, peut comprendre un moyen de temporisation déclenché par la mise sous tension du circuit compensateur et inhibant le déclenchement des thyristors de roue libre pendant une durée prédéterminée de démarrage. Les thyristors évitent ainsi la conduction du courant à travers les condensateurs lors de la mise sous tension du compensateur sur le réseau. A l'issue de la durée prédéterminée de démarrage, les thyristors sont commandés en permanence pour se trouver dans un état de conduction unidirectionnelle identique à celui d'une diode.

Selon un autre mode de réalisation, le circuit de commande tel que le circuit 11 peut comprendre un moyen de mesure de la tension aux bornes des condensateurs de stockage d'énergie 31, 32, 42, 43, 44 et 45, un moyen comparateur pour comparer ladite tension à un seuil de tension prédéterminé et pour produire un signal inhibant le déclenchement des thyristors de roue libre et la conduction des commutateurs statiques lorsque ladite tension est inférieure audit seuil de tension prédéterminé.

Un circuit de commande selon les figures 3 à 5 peut convenir pour piloter le circuit de commutation monophasé de la figure 9. On peut avantageusement utiliser trois circuits de commande selon les figures 3 à 5 pour piloter le circuit de commutation triphasé de la figure 11. Chaque circuit de commande pilote un groupe de commutateurs statiques connecté à l'une des phases du réseau, en fonction des signaux produits par un capteur respectif de courant de phase de charge et par un capteur respectif de courant de phase de réseau.

La présente invention n'est pas limitée aux modes de réalisation qui ont été explicitement décrits, mais elle en inclut les diverses variantes et généralisations contenues dans le domaine des revendications ci-après.

## Revendications

**1 -** Compensateur de courant électrique alternatif, destiné à être connecté en parallèle sur une charge (1) en vue de l'absorption d'un courant alternatif total approprié sur un réseau (2) extérieur de distribution d'énergie électrique, comprenant :
- des moyens (5) pour produire un signal électrique image de l'intensité instantanée du courant débité dans le réseau (2),
- des moyens (6) pour produire un signal électrique image de l'intensité instantanée du courant alternatif total approprié,
- des moyens de stockage d'énergie électrique (8), aptes à stocker et libérer la quantité d'énergie électrique nécessaire à la compensation permanente, au cours d'une période, entre le courant (IC) dans la charge (1) et le courant total approprié,
- des moyens électroniques de commutation statique (9) pour connecter lesdits moyens de stockage d'énergie électrique (8) en parallèle sur la charge (1) à des instants déterminés et selon une proportion déterminée par des signaux de commande de commutation,
- un circuit de commande (11, 12) pour générer en régime permanent lesdits signaux de commande de commutation en fonction de la différence entre ledit signal électrique image du courant instantané dans le réseau (2) et ledit signal électrique image du courant alternatif total approprié, de façon à réduire ou annuler en permanence ladite différence desdits signaux,
caractérisé en ce qu'il comprend des moyens pour, au cours d'une étape préalable de démarrage, emmagasiner dans les moyens de stockage d'énergie (8) une énergie électrique potentielle suffisante adaptée au fonctionnement ultérieur de régime permanent, et des moyens pour inhiber la compensation de courant électrique alternatif lorsque ladite énergie électrique potentielle suffisante n'est pas présente dans les moyens de stockage d'énergie (8).

**2 -** Circuit compensateur selon la revendication 1, caractérisé en ce que :
- les moyens de stockage d'énergie électrique (8) comprennent des condensateurs de stockage d'énergie (31, 32, 42, 43, 44, 45),
- un générateur auxiliaire (46) assure la charge initiale des condensateurs de stockage d'énergie (31, 32, 42, 43, 44, 45) pour emmagasiner ladite énergie électrique potentielle suffisante.

**3 -** Circuit compensateur selon la revendication 2, caractérisé en ce que :
- les moyens électroniques de commutation statique (9) comprennent des commutateurs statiques (81-86), fonctionnant en commutation, et formant un convertisseur continu-alternatif réversible dont l'entrée alternative est connectée aux bornes du réseau (2) par l'intermédiaire d'une ou plusieurs inductances série (22-24 ; 35) de filtrage des harmoniques de courant de découpage et dont l'entrée continue (25, 26) est connectée aux condensateurs de stockage d'énergie électrique,
- chaque commutateur statique (81-86) est associé à un thyristor de roue libre (91-96) connecté en anti-parallèle sur le commutateur, chaque thyristor étant commandé par le circuit de commande (11, 12) de façon à inhiber sa conduction pendant l'étape préalable de démarrage et/ou lorsque l'énergie électrique potentielle suffisante n'est pas présente dans les condensateurs de stockage d'énergie (31, 32, 42, 43, 44, 45), et de façon à provoquer sa conduction unidirectionnelle de type diode pendant le régime permanent.

**4 -** Circuit compensateur selon la revendication 3, caractérisé en ce que le circuit de commande (11, 12) comprend un moyen de temporisation déclenché par la mise sous tension du circuit compensateur et inhibant le déclenchement des thyristors de roue libre pendant une durée prédéterminée de démarrage.

**5 -** Circuit compensateur selon la revendication 3, caractérisé en ce que le circuit de commande (11, 12) comprend un moyen de mesure de la tension aux bornes des condensateurs de stockage d'énergie (31, 32, 42, 43, 44, 45), un moyen comparateur pour comparer ladite tension à un seuil de tension prédéterminé, et pour produire un signal inhibant le déclenchement des thyristors de roue libre et la conduction des commutateurs statiques lorsque ladite tension est inférieure audit seuil de tension prédéterminé.

**6 -** Circuit compensateur selon l'une quelconque des revendications 1 à 5, caractérisé en ce que les moyens (6) pour produire un signal électrique image de l'intensité instantanée du courant alternatif total approprié comprennent :
- des moyens de capteur de courant de charge (14) connectés en série avec la charge (1), produisant un signal électrique image du courant dans la charge (1),
- des moyens de filtrage passe-bande (21) calés sur la fréquence fondamentale de tension réseau, recevant ledit signal électrique image du courant dans la charge et assurant l'extraction de sa composante fondamentale,
le signal ainsi produit constituant ledit signal électrique image de l'intensité instantanée de courant alternatif total approprié, ce signal étant sinusoïdal, de sorte que le circuit compense les harmoniques de courant générés par la charge (1), ainsi que les perturbations apériodiques.

**7 -** Circuit compensateur selon la revendication 6, caractérisé en ce que les moyens pour produire un signal électrique image de l'intensité instantanée du courant alternatif total approprié comprennent en outre :
- des moyens de capteur de tension (15), connectés aux bornes du réseau (2), produisant un signal électrique de synchronisation avec la tension du réseau,
- un circuit (19, 20) pour produire un signal proportionnel à la valeur efficace de ladite composante fondamentale de courant dans la charge,
- un circuit (16) pour produire un signal fonction du déphasage entre le courant (IC) dans la charge et la tension (V) réseau,
- un circuit (18) pour générer un signal sinusoïdal à fréquence fondamentale, en phase avec la tension réseau, et dont l'amplitude est d'une part proportionnelle à la valeur efficace de la composante fondamentale du courant dans la charge et d'autre part décroissante en fonction du déphasage entre le courant dans la charge et la tension réseau, ledit signal étant le signal image de la composante à fréquence fondamentale du courant actif efficace dans la charge, de sorte que le circuit compense simultanément les perturbations d'amplitude et les perturbations de phase de courant générées par la charge (1), ainsi que les perturbations apériodiques.

**8 -** Circuit compensateur selon l'une quelconque des revendications 1 à 7, caractérisé en ce que le circuit de commande (11, 12) comprend :
- un premier moyen comparateur (12) recevant et comparant ledit signal électrique image de l'intensité instantanée du courant débité dans le réseau (2) et ledit signal image de l'intensité instantanée du courant alternatif total approprié, et produisant un signal électrique image du courant de compensation idéal,
- des moyens (105) pour produire un signal électrique image de l'intensité instantanée du courant réel débité dans le circuit compensateur,
- un second moyen comparateur (11) à hystérésis recevant ledit signal électrique image du courant de compensation idéal (37) et ledit signal électrique image du courant réel (137) débité dans le circuit compensateur, pour produire la commutation des commutateurs statiques (9) correspondants dès que le courant réel (137) du compensateur atteint la limite (237, 337) d'une plage de variation prédéterminée autour du courant de compensation idéal (37).

**9 -** Circuit compensateur monophasé selon la revendication 3, caractérisé en ce que :
- les moyens de stockage d'énergie comprennent des éléments condensateurs (31,32, 42-45) connectés en série entre l'entrée continue positive (25) et l'entrée continue négative (26) du convertisseur continu-alternatif réversible,
- les moyens de commutation statique comprennent deux commutateurs statiques (27, 28) associés à des diodes ou des thyristors de roue libre (29, 30) et connectés en série entre l'entrée continue positive (25) et l'entrée continue négative (26) du convertisseur continu-alternatif réversible,
- l'entrée alternative du convertisseur continu-alternatif réversible est formée par les points de connexion respectifs (33, 34) des deux commutateurs statiques (27, 28) et des condensateurs de stockage d'énergie (31, 32, 42-45), ladite entrée alternative étant connectée aux bornes du réseau (2) en série avec l'inductance de filtrage (35) des harmoniques de courant de découpage.

**10 -** Circuit compensateur triphasé selon la revendication 3, caractérisé en ce que :
- les moyens de stockage d'énergie comprennent des éléments condensateurs (31, 32, 42-45) connectés en série entre l'entrée continue positive (25) et l'entrée continue négative (26) du convertisseur continu-alternatif réversible, leur point milieu (34) étant connecté au neutre (N) du réseau (2),
- les moyens de commutation statique comprennent trois groupes de deux commutateurs statiques (27, 28 ; 127, 128 ; 227, 228) série associés à des thyristors de roue libre (29, 30 ; 129, 130 ; 229, 230) et connectés en parallèle entre l'entrée continue positive (25) et l'entrée continue négative (26) du convertisseur continu-alternatif réversible, les points milieu respectifs (33) des groupes de commutateurs statiques étant connectés à l'une des phases respectives (R) du réseau (2) par l'intermédiaire d'une inductance série respective (35) de filtrage des harmoniques de courant de découpage.
